# EUROPÄISCHE PATENTSCHRIFT

(11) **EP 1 310 346 B1**
(45) Veröffentlichungstag und Bekanntmachung des Hinweises auf die Patenterteilung: **13.04.2005**
(21) Anmeldenummer: 02024935.5
(22) Anmeldetag: 06.11.2002
(51) Int. Cl.: B29C 45/67

(54) **Schliesseinheit für eine Kunststoffverarbeitungsmaschine**
Clamping system for a plastic injection molding apparatus
Dispositif de fermeture du moule pour une machine à injecter de matières plastiques

(30) Priorität: 08.11.2001 DE 10154465
(43) Veröffentlichungstag der Anmeldung: 14.05.2003
(73) Patentinhaber: Bosch Rexroth AG, 97816 Lohr (DE)
(72) Erfinder: Dantlgraber, Jörg, 97816 Lohr (DE)
(74) Vertreter: Winter, Brandl,&Fürniss, Hübner Röss, Kaiser, Polte Partnerschaft Patent- und Rechtsanwaltskanzlei

(56) Entgegenhaltungen:
- DE-B- 1 203 449
- FR-A- 1 065 384
- FR-A- 1 324 886
- FR-A- 1 492 545
- FR-A- 2 021 870
- US-A- 5 863 474

## Beschreibung

Die Erfindung betrifft eine Schliesseinheit für eine Kunststoffverarbeitungsmaschine, insbesondere für eine Spritzgiessmaschine gemäß dem Oberbegriff des Patentanspruchs 1.

Eine derartige Schliesseinheit ist aus der FR-A-492 545 bekannt. Die FR-A-1 324 886 zeigt eine Schliesseinheit mit mechanischer Verriegelung.

Schliesseinheiten übernehmen die Schliess- und Öffnungsbewegung von Werkzeughälften. Darüber hinaus muss durch die Schliesseinheit sichergestellt werden, dass die für den Einspritzprozess erforderliche Zuhaltekraft hinreichend ist, um ein auseinandertreiben der Werkzeughälften durch die mit hohem Druck einströmende plastifizierte Formmasse zu verhindern.

Bei formschlüssigen Systemen, beispielsweise Kniehebel- oder Spreizhebelsystemen erfolgt das Zusammenhalten der Werkzeughälften durch selbstsperrende mechanische Bauelemente. Bei kraftschlüssigen Systemen wird die Zuhaltekraft über hydraulische Arbeitszylinder oder ähnliches aufgebracht.

In der AT 400 941 B ist eine Schliesseinheit einer Spritzgiessmaschine offenbart, bei der das Aufbringen der Zuhaltekraft und die Schliess- und Öffnungsbewegung der Werkzeughälften mittels eines Hydraulikzylinders erfolgt, der über eine Kolbenpumpe mit Druckmittel versorgt wird. Diese Kolbenpumpe wird über eine elektrisch verstellbare Spindel betätigt.

In der DE 41 11 594 A1 ist eine Schliesseinheit für eine Spritzgiessmaschine gezeigt, bei der die Öffnungsund Schliessbewegung und die Zuhaltekraft über eine Kombination aus einer Gewindespindel und einem von der Gewindespindel verschiebbaren, auf die bewegliche Werkzeughälfte wirkenden Hydraulikzylinder gesteuert ist. Die Gewindespindel wirkt dabei auf einen Kolben des Hydraulikzylinders, der in einem Zylinder geführt ist, an dem die bewegliche Werzeughälfte abgestützt ist. Zum Aufbringen der Zuhaltekraft wird der als Differentialzylinder ausgeführte Hydraulikzylinder mit Druckmittel beaufschlagt, so dass der Zylinder gegenüber dem über die Gewindespindel abgestützen Kolben in Zuhalterichtung wirksam ist.

Nachteilig bei den vorbeschriebenen Lösungen ist, dass die Gewindespindel während des Einspritzvorgangs mit erheblichen Kräften belastet ist, die durch eine entsprechend stabile Konstruktion der Gewindespindel aufgefangen werden müssen.

Dem gegenüber liegt der Erfindung die Aufgabe zugrunde, eine Schliesseinheit zu schaffen, bei der die Belastung der Gewindespindel und die Verriegelung gegenüber den bekannten Lösungen verringert ist.

Diese Aufgabe wird durch eine Schliesseinheit mit den Merkmalen des Patentanspruchs 1 gelöst.

Erfindungsgemäß hat die Schliesseinheit einen Zuhaltezylinder, der mittels zumindest eines weiteren hydraulischen Schliesszylinders zum Öffnen- oder Schliessen des Werkzeuges verschiebbar ist. Der hydraulische Schliesszylinder lässt sich beim Aufbringen der Zuhaltekraft über den Zuhaltezylinder hydraulisch verriegeln, so dass die Zuhaltekräfte über diese Verriegelung abgestützt sind. Durch diese Verriegelung lassen sich die auf den Antrieb des Schliesszylinders wirkenden Belastungen gegenüber den vorbeschriebenen Lösungen wesentlich verringern, so dass die Schliesseinheit einfacher und damit kostengünstiger aufgebaut werden kann.

Die Ansteuerung des Zuhaltezylinders erfolgt über eine Zuhalteventileinrichtung, über die ein in Schliessrichtung wirksamer Druckraum des Zuhaltezylinders mit einem entsprechend wirkenden Druckraum des Schliesszylinders oder einem Druckanschluss einer Pumpe verbindbar ist.

Zur Verriegelung der dynamischen Belastung der Dichtungen des Schliesszylinders ist diesem erfindungsgemäß ein -Kompensationseinrichtung zugeordnet, über die bei Aufbringen der Zuhaltekraft über den Zuhaltezylinder Druckmittel in den in Schliessrichtung wirksamen Druckraum des Schliesszylinders eingespeist werden kann, so dass der Kolben des Schliesszylinders in seiner verriegelten Stellung verbleibt.

Der Aufbau der Schliesseinheit ist besonders kompakt, wenn die Verbindung zwischen den Druckräumen des Zuhaltezylinders und des Schliesszylinders durch eine Kolbentange des Schliesszylinders geführt ist, die mit dem Zuhaltezylinder verbunden ist. Die direkte Zuführung des Druckmittels über die Zugstange hat den Vorteil, dass keine elastischen Verbindungsleitungen oder Anschlüsse vorgesehen werden müssen.

Bei einer Ausführungsform, wird die Zuhalteventileinrichtung als Mehrwegeventil ausgeführt, das zumindest in einer Position den Druckraum des Zuhaltezylinders mit der Pumpe verbindet und den Schliesszylinder hydraulisch verriegelt.

Das Mehrwegeventil kann auch durch zwei Ventile gebildet sein.

Der kleine Zylinderraum des Druckübersetzer ist mit dem Druckraum des Schliesszylinders und der größere Zylinderraum mit dem Druckraum des Zuhaltezylinders verbunden. Das Übersetzungsverhältnis ist so gewählt, dass das während des Aufbaus der Zuhaltekraft aus dem Druckübersetzer verdrängte Druckmittel ausreicht, um den Schliesszylinder in seiner vorbestimmten Verriegelungsposition zu halten.

Vorteilhafterweise wird ein Druckübersetzerkolben des Druckübersetzers mittels einer Druckfeder in eine Grundposition vorgespannt, in der der Zylinderraum mit größerem Durchmesser minimal ist.

Das- Regelventil kann bei einem vorteilhaften Ausführungsbeispiel in Abhängigkeit von der Wirkposition des Schliesszylinders angesteuert werden.

Die Ansteuerung der Schliesseinheit lässt sich weiter verbessern, wenn dem Druckübersetzer ein Regelventil zugeordnet wird, über das eine der größeren Zylinderfläche des Druckübersetzers entgegenwirkende Ringstirnfläche mit Niederdruck oder dem Druck im Druckraum des Zuhaltezylinders beaufschlagbar ist. Durch entsprechende Ansteuerung des Regelventils können sich ändernde Totvolumina des Systems und Veränderungen der Schliessposition ausgeglichen werden.

Das Flächenverhältnis des Druckübersetzers mit Bezug zum entsprechenden Flächenverhältnis des Kolbens des Schliesszylinders und des Zuhaltekolbens ist so gewählt, dass im verriegelten Zustand der Schliesseinheit eine hinreichende Druckmittelversorgung des in Schliessrichtung wirksamen Druckraumes des Schliesszylinders gewährleistet ist.

Das Hydrauliksystem der Schliesseinheit wird vorzugsweise als geschlossenes System ausgebildet, wobei ein in Öffnungsrichtung wirksamer Druckraum des Schliesszylinders mit einem Rücklaufanschluss der Pumpe verbunden ist. Alternativ kann die Schliesseinheit auch mit einem offenen System ausgeführt werden, bei dem der letztgenannte Druckraum mit einem Tank verbunden ist.

Erfindungsgemäß wird es bevorzugt, wenn die Pumpe zur Druckmittelversorgung als Kolbenpumpe ausgeführt ist, die über eine Gewindespindel betätigbar ist.

Bei einem besonders einfach aufgebauten Ausführungsbeispiel wird ein Kolben des Zuhaltezylinders mittels einer Feder in eine Grundposition vorgespannt, in der der in Schliessrichtung wirksame Druckraum des Zuhaltezylinders minimal ist.

Bei einer alternativen Variante wird der Kolben des Zuhaltezylinders mit einer in Öffnungsrichtung wirksamen Ringstirnfläche ausgeführt, die über die Zuhalteventileinrichtung zur Rückstellung des Kolbens mit Druckmittel beaufschlagbar ist.

Der Schliesszylinder oder der Zuhaltezylinder kann mit einem feststehenden Zylinder und beweglicher Kolbenstange oder - in kinematischer Umkehr - mit einem ortsfesten Kolben und verschiebbar gelagerten Zylinder ausgeführt werden.

Dabei kann die Kolbenstange an einer feststehenden Stützplatte abgestützt werden und ein Zylindergehäuse des Schliesszylinders axial verschiebbar auf dem Kolben geführt sein. Das Zylindergehäuse ist dann seinerseits von einem Gehäuse des Zuhaltezylinders umgriffen, das über eine Zugstange auf die bewegliche Stützplatte wirkt.
Die Sdruckmittelversorgung dieses geschachtelten Systems erfolgt über die Zuhalteventileinrichtung und ein zusätzliches Ventil, über das der Zuhaltezylinder zum Entspannen der Schliesseinheit zurückfahrbar ist.

Sonstige vorteilhafte Weiterbildungen der Erfindung sind Gegenstand der weiteren Unteransprüche.

Im folgenden werden bevorzugte Ausführungsbeispiele der Erfindung anhand schematischer Zeichnungen näher erläutert. Es zeigen:
Figur 1 eine Schliesseinheit mit mechanischer Verriegelung;
Figur 2 eine Schliesseinheit mit hydraulischer Verriegelung;
Figur 3 eine Variante der in Figur 2 dargestellten Schliesseinheit, wobei eine Kolbenstange eines Schliesszylinders ortsfest angeordnet ist;
Figur 4 eine erfindungsgemäße Schliesseinheit mit hydraulischer Verriegelung und Kompensationseinrichtung zur Vermeidung von Axialverschiebungen des Schliesszylinders bei Aufbringen der Zuhaltekraft und mit einem offenen Hydrauliksystem;
Figur 5 die Variante aus Figur 4 mit geschlossenem Hydrauliksystem;
Figur 6 eine Variante des Systems aus Figur 5 mit feststehender Kolbenstange und beweglichem Zylinder;
Figur 7 eine Variante der Schliesseinheit aus Figur 5 und
Figur 8 eine Weiterbildung der Schliesseinheit aus Figur 7 mit Druckbeaufschlagung eines Federraums des Druckübersetzers.

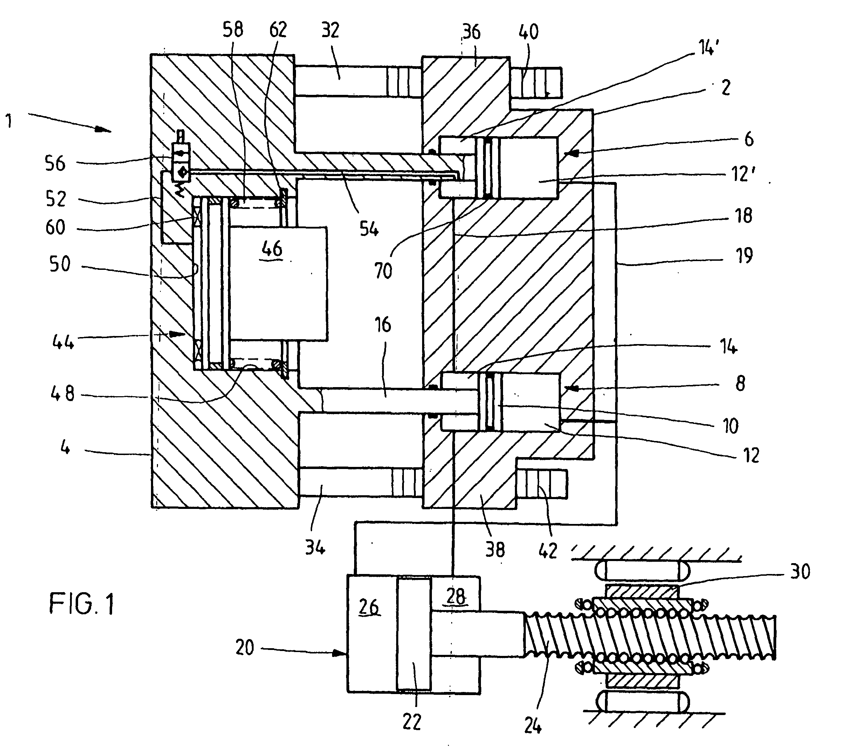

Die Figuren 1 bis 3 zeigen keine erfindungsgemäße Schliesseinheit sondern dienen lediglich zur Erläuterung.

In Figur 1 ist in stark vereinfachter Form eine Schnittdarstellung einer Schliesseinheit 1 einer Spritzgießmaschine dargestellt. Diese Schliesseinheit 1 hat eine feststehende Stützplatte 2 und eine bewegliche Stützplatte 4, auf denen die Werkzeughälften eines Spritzgießwerkzeuges aufgespannt sind. D. h., die Stützplatten 2, 4 wirken als Werkzeugspannplatten oder stützen derartige Spannplatten ab. Die feststehende Stützplatte 2 bildet einen Zylinder für mehrere parallel angeordnete Schliesszylinder 6, 8, die als Differentialzylinder ausgeführt sind. Jeder Schliesszylinder 6, 8 hat einen Kolben 10, über den der jeweilige Zylinder in einen rückwärtigen Zylinderraum 12 und einen vorderen Ringraum 14 unterteilt ist. Der Kolben 10 hat eine Kolbenstange 16, die sich aus der feststehenden Stützplatte 2 heraus erstreckt und mit der beweglichen Stützplatte 4 verbunden ist. D. h., bei einer Axialverschiebung der beiden Kolben 10 der Schliesszylinder 6, 8 wird die bewegliche Stützplatte 4 parallel zur feststehenden Stützplatte 2 verschoben. Die beiden Ringräume 14 der Schliesszylinder 6, 8 sind über eine Druckleitung 18 mit einem Druckanschluss und die beiden Zylinderräum 12 der Schliesszylinder 6, 8 über eine Rücklaufleitung 19 mit einem Rücklaufanschluss einer Kolbenpumpe 20 verbunden.

Diese Kolbenpumpe 20 hat einen Differentialkolben 22, dessen Kolbenstange mit einer Gewindespindel 24 verbunden ist. Durch den Differentialkolben 22 wird der Kolbenraum der Kolbenpumpe 20 in einen bodenseitigen Raum 26 und einen kolbenstangenseitigen Raum 28 unterteilt, wobei die Druckleitung 18 in den kolbenseitigen Raum 28 und die Rücklaufleitung 19 in dem Raum 26 der Kolbenpumpe 20 mündet. Die drehfest gelagerte Gewindespindel 24 kämmt mit einer Spindelmutter 30, die über einen Antrieb ansteuerbar ist, so dass eine Drehbewegung der Spindelmutter 30 in eine Axialverschiebung der Gewindespindel 24 und damit des Differentialkolbens 22 umgesetzt wird.

In der beweglichen Spannplatte 4 sind zwei Führungssäulen 32, 34 befestigt, die entsprechende Führungen 36, 38 der feststehenden Werkzeugspannplatte durchsetzen. Im Bereich der Führungen 36, 38 sind an den Führungssäulen 32, 34 mechanische Verriegelungseinrichtungen 40, 42 vorgesehen, über die die Führungssäulen 32, 34 mit den Führungen 36, 38 verriegelbar sind, so dass die beiden Stützplatten 2, 4 im wesentlichen starr miteinander verbindbar sind.

In die bewegliche Stützplatte 4 ist ein Zuhaltezylinder 44 integriert. Dieser hat einen Zuhaltekolben 46 der direkt oder über eine Werkzeugspannplatte auf die bewegliche Werkzeughälfte des Spritzgießwerkzeuges wirkt. Der Zuhaltekolben 46 ist in einer Zylinderbohrung 48 der Stützplatte 4 geführt. Der Boden dieser Zylinderbohrung 48 begrenzt mit der benachbarten Stirnfläche des Zuhaltekolbens 46 einen Druckraum 50, der über einen Druckkanal 52 mit der Druckleitung 18 verbunden ist. Wie der Figur 1 entnehmbar ist, erstreckt sich der Druckkanal 52 vom Druckraum 50 weg durch die bewegliche Stützplatte 4 hindurch und mündet in einem Kolbenstangenkanal 54, der seinerseits im Ringraum 14' des Schliesszylinders 6 mündet. Im Bereich zwischen dem Druckraum 50 und dem Kolbenstangenkanal 54 ist ein Zuhalteventil 56 angeordnet. Dieses ist beim dargestellten Ausführungsbeispiel als elektrisch betätigbares Schaltventil ausgeführt, das in seiner federvorgespannten Grundposition die Verbindung zwischen dem Kolbenstangenkanal 54 und dem Druckkanal 52 absperrt. Bei Ansteuerung des Zuhalteventils 56 wird diese Verbindung aufgesteuert, so dass der Druckraum 50 mit der Druckleitung 18 und damit den kolbenseitigen Raum 28 der Kolbenpumpe 20 verbunden ist.

Der Zuhaltekolben 46 wird bei dem in Figur 1 dargestellten Ausführungsbeispiel mittels einer Feder 58 in eine Grundposition gegen Anschlagkörper 60 vorgespannt, so dass der Druckraum 50 in der federvorgespannten Grundposition des Zuhaltekolbens 46 minimal ist. Bei der dargestellten Variante ist die Feder 58 an einem Stützring 62 abgestützt, der in die Innenumfangswandung der Zylinderbohrung 48 eingesetzt ist.

Es sei zunächst angenommen, dass das Werkzeug vollständig geöffnet ist. Zum Schliessen des Werkzeuges im Eilgang wird zunächst die Spindelmutter 30 derart angesteuert, dass die Gewindespindel 24 in der Darstellung gemäß Figur 1 nach rechts bewegt und das Volumen des kolbenstangenseitigen Raumes 28 verringert wird. Das aus diesem verdrängte Druckmittel strömt über den Druckkanal 18 in die Ringräume 14, 14' der Schliesszylinder 6, 8, so dass die Kolben 10 entsprechend nach rechts bewegt und der Abstand zwischen der feststehenden Stützplatte 2 und der beweglichen Stützplatte 4 verringert wird - das Werkzeug wird geschlossen. Das aus den Zylinderräumen 12, 12' verdrängte Druckmittel tritt über die Rücklaufleitung 19 in den bodenseitigen Raum 26 der Kolbenpumpe 20 ein - der Druckmittelkreislauf ist geschlossen.

Nach dem Schließen des nicht dargestellten Werkzeuges werden die Verriegelungen 40, 42 angesteuert, so dass die bewegliche Stützplatte 4 starr mit der feststehenden Stützplatte 2 verbunden ist. Gleichzeitig wird das Zuhalteventil 56 angesteuert und in seine Durchflussstellung gebracht, so dass Druckmittel durch die weiter angesteuerte Kolbenpumpe 20 über die Druckleitung 18, den Kolbenstangenkanal 54, das geöffnete Zuhalteventil 56 und den Druckkanal 52 in den Druckraum 50 gefördert wird. Durch den sich im Druckraum 50 einstellenden Druck wird der Zuhaltekolben 46 in der Darstellung gemäß Figur 1 nach rechts bewegt und das Werkzeug mit großer Kraft (in Abhängigkeit vom Flächenverhältnis des Differentialkolbens 22 und des Zuhaltekolbens 46) zugehalten und die erforderliche Schliesskraft aufgebaut. Die Belastung ist dabei minimal, da die Schliesszylinder 6, 8 während dieses Aufbringens der Schliesskraft praktisch über die Verriegelungen 40, 42 mechanisch verriegelt sind.

Zum Öffnen des Werkzeuges wird die Spindelmutter 30 in umgekehrter Richtung angesteuert, so dass die Gewindespindel 24 nach links (Ansicht nach Figur 1) bewegt wird - das Druckmittel strömt dann vom Druckraum 50 über den vorbeschriebenen Druckmittelströmungspfad zurück in den kolbenstangenseitigen Raum 28, das der Zuhaltekolben 46 durch die Kraft der Feder 58 zurück in seine Ausgangspositon bewegt wird. Nach Erreichen dieser Ausgangsposition wird das Zuhalteventil 56 in seine dargestellte Grundposition zurückgeschaltet, so dass beim weiteren Antrieb der Kolbenpumpe 20 die beiden Stützplatten 2, 4 in ihre in Figur 1 dargestellte Grundposition zurückverfahren werden.

Bei dem vorbeschriebenen Ausführungsbeispiel erfolgte die Verriegelung der Schliesszylinder durch geeignete mechanische Verrieglungseinrichtungen 40, 42. Im folgenden werden Ausführungsbeispiele erläutert, bei denen diese Verriegelung auf hydraulischem Wege erfolgt.

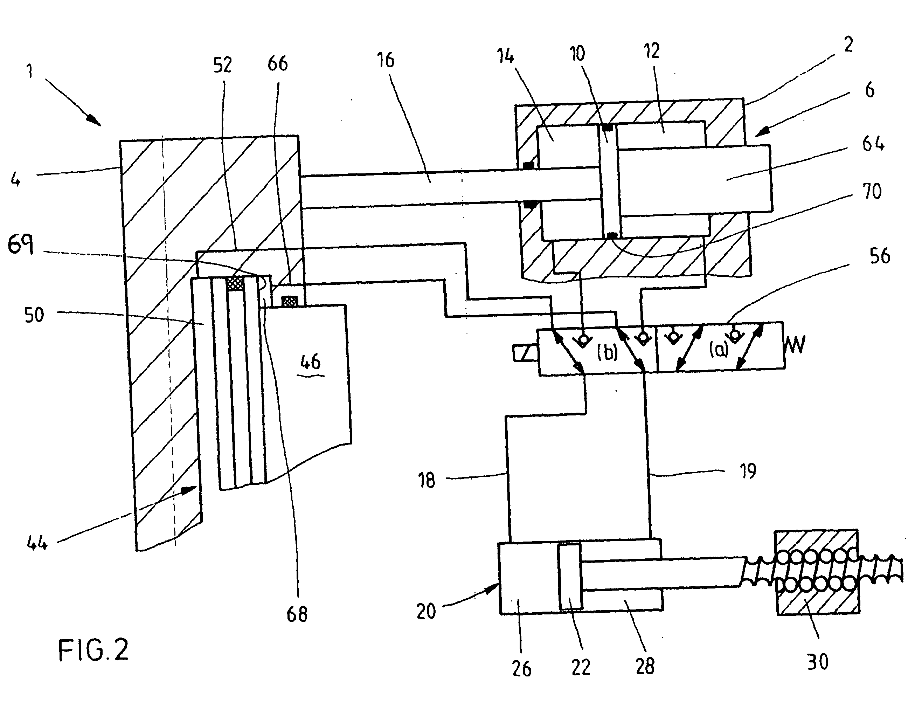

Bei der in Figur 2 gezeigten Variante ist ebenfalls in der feststehenden Stützplatte 2 zumindest ein Schließzylinder 6 und in der beweglichen Stützplatte 4 ein Zuhaltezylinder 44 angeordnet. Die Druckmittelversorgung erfolgt wieder über eine Kolbenpumpe 20, die den gleichen Aufbau wie beim vorbeschriebenen Ausführungsbeispiel hat.

Bei der dargestellten Variante ist das Zuhalteventil 56 nicht in die bewegliche Stützplatte 4 integriert und derart ausgelegt, dass die Druckmittelzufuhr sowohl in der Druckleitung 18 als auch in der Rücklaufleitung 19 auf- bzw. zusteuerbar ist.

Der Kolben 10 jedes Schliesszylinders 6 ist beim dargestellten Ausführungsbeispiel als Differentialkolben ausgeführt, wobei der rückwärtige, in Öffnungsrichtung wirksame Zylinderraum 12 durch einen Kolbenbund 64 ebenfalls als Ringraum ausgeführt ist. Der vordere Ringraum 14 wird wie beim vorbeschriebenen Ausführungsbeispiel von einer Kolbenstange 16 des Kolbens durchsetzt, die mit der beweglichen Stützplatte 4 verbunden ist.

In der in Figur 2 dargestellten Schaltposition b des Zuhalteventils 56 sind die mit den Räumen 12, 14 verbundenen Leitungen 19 bzw. 18 abgesperrt, so dass der Kolben 10 des Schliesszylinders hydraulisch verriegelt ist. Dabei sind die zwischen der Kolbenpumpe 20 und dem Zuhalteventil 56 gelegenen Abschnitte der Druckleitungen 18, 19 mit dem zum Druckraum 50 führenden Druckanal 52 bzw. mit einem Rücklaufkanal 66 verbunden. Dieser mündet in einem durch eine Ringschulter 70 des als Stufenkolben ausgeführten Zuhaltekolbens 46 begrenzten Ringraum 68. Entsprechend ist auch die Zylinderbohrung 48 zum kleineren Endabschnitt des Kolbens 46 radial zurückgestuft.

In der federvorgespannten Grunstellung a des Zuhalteventils 56 wird die Verbindung zum Druckkanal 52 und zum Rücklaufkanal 66 abgesperrt, während die Verbindung der Druckleitung 18 und der Rücklaufleitung 19 zu den zugeordneten Ringräumen 14, 12 geöffnet ist - der Schliesszylinder ist entriegelt.

Zum zufahren des zwischen den Platten 2, 4, eingespannten Werkzeuges wird das Zuhalteventil 56 in seine federvorgespannte Grundposition a gebracht und die Kolbenpumpe 20 betätigt, wobei bei dem in Figur 2 dargestellten Ausführungsbeispiel der Differentialkolben 22 nach links verschoben wird, so dass das Volumen des bodenseitigen Raums 26 verringert wird. Das Druckmittel strömt dann von diesem bodenseitigen Raum 26 in den Ringraum 14, so dass der Kolben 10 in der Darstellung gemäß Figur 2 nach rechts bewegt wird. Das im rückwärtigen Zylinderraum 12 aufgenommene Druckmittel wird in den kolbenstangenseitigen Raum 28 der Kolbenpumpe 20 verdrängt. Durch diese Axialverschiebung des Kolbens 10 des Schliesszylinders wird die bewegliche Stützplatte 4 hin zur feststehenden Stützplatte 2 verschoben - das Werkzeug wird im Eilgang geschlossen.

Nach dem Zufahren des Werkzeuges wird das Zuhalteventil 56 in seine dargestellte Schaltposition b umgeschaltet, so dass der Schliesszylinder hydraulisch eingespannt ist. Die Kolbenpumpe 20 wird weiter angesteuert, so dass Druckmittel vom bodenseitigen Raum 26 über das Zuhalteventil 56 und die Druckleitung 52 in den Druckraum 50 gefördert wird. Dadurch wird der Zuhaltekolben 46 ausgefahren und die auf das Werkzeug wirkende Zuhaltekraft aufgebracht. Diese Zuhaltekraft baut sich wieder in Abhängigkeit von dem im bodenseitigen Raum 26 der Kolbenpumpe 20 wirkenden Druck und vom Flächenverhältnis der größeren Wirkflächen des Differentialkolbens 22 und des Zuhaltekolbens 46 auf. In Gegenrichtung wirkt der auf die Ringfläche 70 wirkende Druck im Ringraum 68, der dem Druck im kolbenstangenseitigen Raum 28 entspricht.

Nach Beenden des Spritzgießvorganges wird das Werkzeug aufgefahren, indem die Kolbenpumpe 20 in umgekehrter Richtung angesteuert wird, so dass das Volumen des kolbenstangenseitigen Raumes 28 verkleinert wird. Dadurch wird Druckmittel von diesem Raum 28 über die Rücklaufleitung 66 in den Ringraum 68 verdrängt, so dass der Zuhaltekolben 46 wieder zurück in seine Grundposition (siehe Figur 1) zurückbewegt wird. Das aus dem Druckraum 50 verdrängte Druckmittel strömt über die Druckleitung 52 in den bodenseitigen Raum 26 der Kolbenpumpe 20. Anschließend wird das Zuhalteventil 56 in seine Grundposition a gebracht und die bewegliche Stützplatte 4 im Eilgang in ihre Öffnungsposition verfahren.

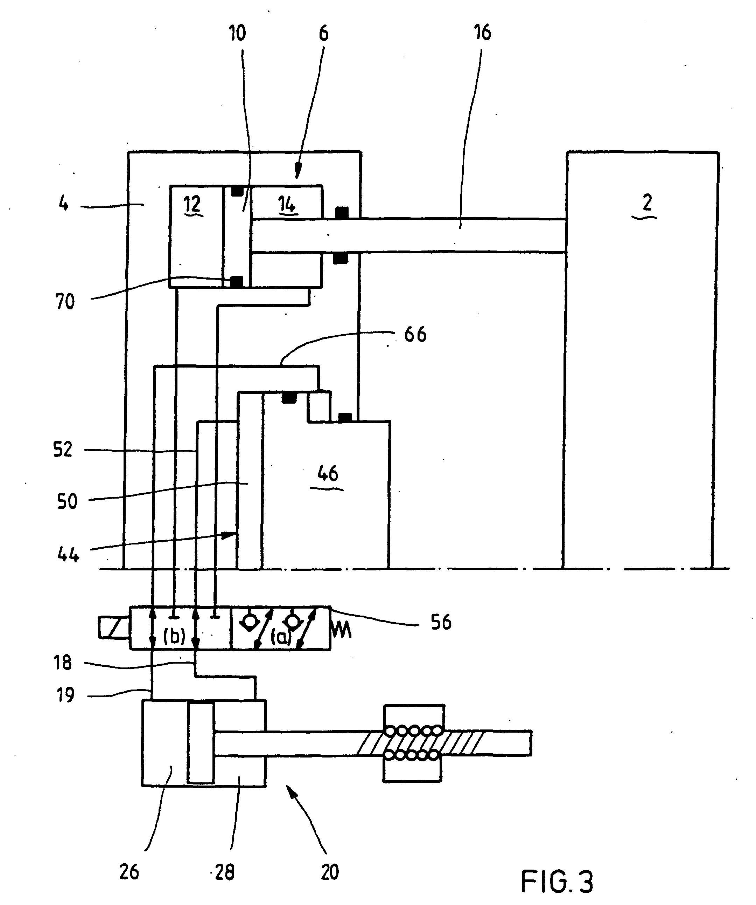

Figur 3 zeigt, eine Variante den in Figur 2 dargestellten Schliesseinheit, wobei die Funktion des Schliesszylinders 6 in kinematischer Umkehr des in Figur 2 dargestellten Prinzipes gelöst ist. Dabei ist der Kolben 10 der Schliesszylinder jeweils feststehend ausgeführt und über die Kolbenstange 16 an der feststehende Stützplatte 2 abgestützt. Der Schliesszylinder selbst ist praktisch in die bewegliche Stützplatte 4 integriert, d. h., die vom Kolben 10 voneinander getrennten Räume (Ringraum 14; Zylinderraum 12) sind in der beweglichen Stützplatte 4 ausgebildet, die von der Kolbenstange 16 abschnittsweise durchsetzt wird. Bei, den in Figur 3 dargestellten Schliesseinheit ist die Druckleitung 18 - wie bei der in Figur 1 dargestellten Variante - an den kolbenstangenseitigen Raum 28 und die Rücklaufleitung 19 an den bodenseitigen Raum 26 der Kolbenpumpe 20 angschlossen.

In der in Figur 3 dargestellten Schaltposition b des Zuhalteventils 56 sind die Leitungen 18, 19 mit dem Druckkanal 52 bzw. dem Rücklaufkanal 66 verbunden. Die zu den Räumen 12, 14 führenden Abschnitte der Druckleitung 18 und der Rücklaufleitung 19 sind abgesperrt, so dass der Schliesszylinder 6 wiederum hydraulisch verriegelt ist. Bei Umschalten des Zuhalteventils 56 in seine federvorgespannte Grundposition a werden die Kanäle 52, 66 abgesperrt und die Verbindung der Druckleitung 18 mit dem Ringraum 14 und der Rücklaufleitung 19 mit dem Zylinderraum 12 aufgesteuert.

Im Eilgang befindet sich das Zuhalteventil 56 in seiner Grundposition a, so dass beim Ansteuern der Kolbenpumpe 20 und einer damit einhergehenden Verkleinerung des kolbenstangenseitigen Raums 28 Druckmittel über die Druckleitung 18 in den Ringraum 14 gefördert wird. Da der Kolben 10 mit der feststehenden Stützplatte 12 verbunden ist, wird durch den Druck im Ringraum 14 die Stützplatte 4 in der Darstellung gemäß Figur 3 nach rechts - in Schliessrichtung - bewegt. Dadurch wird das Druckmittel aus dem Zylinderraum 12 über das Zuhalteventil 56 und die Rücklaufleitung 19 in den bodenseitigen Raum 26 der Kolbenpumpe 20 verdrängt. Bei Erreichen der Schliessposition wird dann das Zuhalteventil 56 in seine mit b bezeichnete Schaltposition umgeschaltet, die Schliesszylinder 6, 8 verriegelt und der Zuhaltekolben 46 des Zuhaltezylinders 44 in der gleichen Weise wie im Zusammenhang mit Figur 2 beschrieben zum Aufbringen einer Zuhaltekraft ausgefahren. Das Öffnen des Werkzeuges erfolgt dann in umgekehrter Weise.

Bei den in den Figuren 2 und 3 dargestellten Schliesseinheiten muss die beim Einspritzen erforderliche Zuhaltekraft für die beiden Werkzeughälften im Ringraum 14 abgestützt werden. Die entsprechende Ringfläche A₁' des Kolbens 10 des Schliesszylinders ist wesentlich geringer als die in Schliesskraftrichtung wirkende Fläche A₁ des Zuhaltekolbens 46. Nimmt man beispielsweise an, dass die in Schliessrichtung wirksame Fläche A₁ des Zuhaltekolbens 46 zehnmal größer als die Ringfläche A₁' des Kolbens 10 des Schliesszylinders ist und dass während des Einspritzvorganges im Druckraum 50 ein Druck von 200 bar anliegt, so entsteht in Folge des Flächenverhältnisses im Ringraum 14 ein Druck von 2000 bar. In Folge der Kompressibilität des Druckmittels wird sich dann der Kolben 10 um einige Millimeter nach links bewegen. Problematisch dabei ist, dass dabei die am Aussenumfang des Kolbens 10 vorgesehenen Dichtungen 70 extrem hoch belastet werden, da diese nur im ruhenden Zustand Drücke bis 2000 bar abdichten können. Die Belastbarkeit bewegter Dichtungen ist wesentlich geringer, so dass durch diese Verschiebung des Kolbens 10 die Dichtungen 70 bei hohen wirksamen Schliesskräften zerstört werden können.

Bei den im folgenden beschriebenen erfindungsgemässen Ausführungsbeispielen wird eine Kompensationseinrichtung eingesetzt, um diese Bewegung des Kolbens 10 zu verhindern.

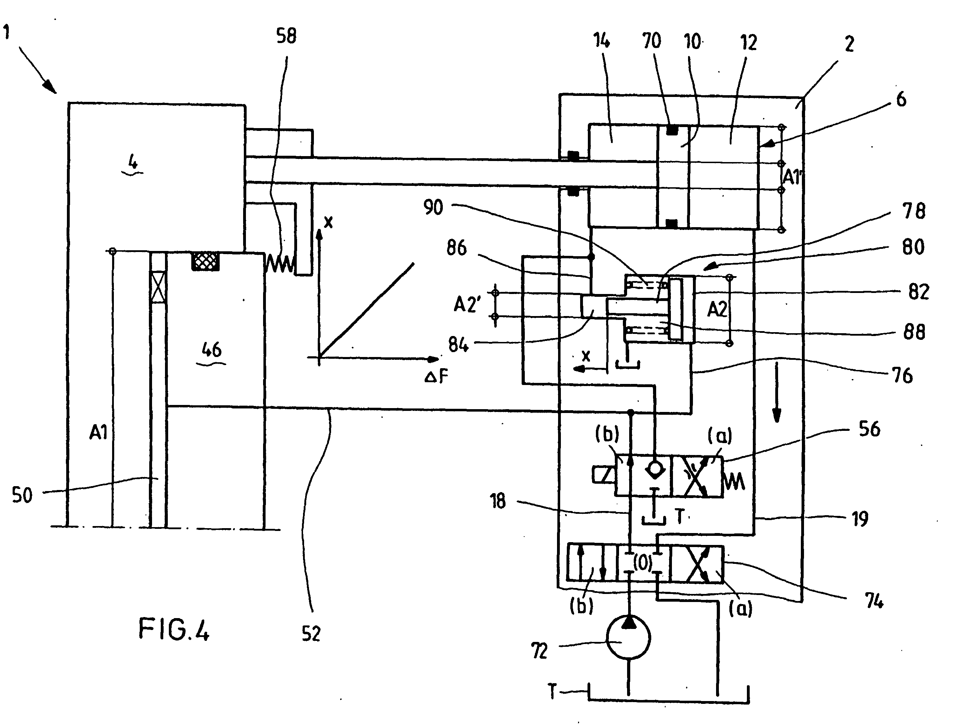

Figur 4 zeigt ein Ausführungsbeipsiel, bei dem die Schliesseinheit 1 mit einem offenen Hydrauliksystem ausgeführt ist. D. h., das zur Betätigung der Schliesseinheit 1 erforderliche Druckmittel wird über eine Pumpe 72 aus einem Tank T angesaugt und das aus den Arbeitsräumen verdrängte Druckmittel in den Tank T zurückgeführt.

Die Druckmittelströme innerhalb der Druckleitung 18 und der Rücklaufleitung 19 werden mittels eines Steuerventils 74 gesteuert. Dieses sperrt in seiner dargestellten Grundposition die Druckleitung 18 und die Rücklaufleitung 19 ab. In den beiden Schaltpositionen a, b wird die Verbindung zu dem nachgeschalteten Zuhalteventil 76 aufgesteuert. Dies verbindet in seiner federvorgespannten Grundposition a die Druckleitung 18 mit dem Ringraum 14 des Schliesszylinders 6 während der im Druckraum 15 mündende Druckkanal 52 über das Zuhalteventil 56 mit dem Tank T verbunden ist. In der dargestellten Schaltposition b des Zuhalteventils 56 ist der Druckkanal 52 mit der Druckleitung 18 verbunden, während die Verbindung zum Ringraum 14 abgesperrt ist.

In der Schaltposition b des Steuerventils 74 ist der Druckkanal 18 mit dem Druckanschluss der Pumpe 72 und der Rücklaufkanal 19 mit dem Tank T verbunden. In der mit a bezeichneten Schaltstellung ist in umgekehrter Weise die Rücklaufleitung 19 mit dem Druckanschluss der Pumpe 72 und die Druckleitung 18 mit dem Tank T verbunden.

Stromabwärts des Zuhalteventils 56 zweigt von dem Druckkanal 52 eine Kompensationsleitung 76 ab, die zu einem Druckübersetzer 80 als Kompensationseinrichtung geführt ist. Dieser Druckübersetzer 80 hat einen als Stufenkolben ausgeführten Druckübersetzerkolben 78, der mit seiner größeren Bodenfläche A₂ einen Bodenraum 82 und mit seiner Kolbenstange (Fläche A₂') einen Kolbenstangenraum 84 begrenzt. Die Kompensationsleitung 76 mündet in dem Bodenraum 82, während eine von dem Abschnitt der Druckleitung 18 zwischen dem Zuhalteventil 56 und dem Ringraum 14 abzweigende Füllleitung 86 im Kolbenstangenraum 84 mündet. Der Druckübersetzerkolben 78 wird über eine in einem Federraum 88 aufgenommene Druckfeder 90 in eine Grundposition vorgespannt, in der das Volumen des Bodenraums 82 minimal ist.

Für die folgenden Ausführungen wird die kleinere Stirnfläche des Druckübersetzerkolbens 80 mit der Fläche A₂', die in Schliessrichtung wirksame Fläche des Zuhaltekolbens 46 mit A₁ und die in Schliessrichtung wirksame Ringstirnfläche des Kolbens 10 des Schliesszylinders 6 mit A₁' bezeichnet. Das Flächenverhältnis A_{2/}A₂' wird dabei größer als das Flächenverhältnis A₁/A₁' gewählt. Die Wirkung dieses Druckflächenverhältnisses wird im folgenden bei der Beschreibung der Funktion der Schliesseinheit erläutert.

Zum Schliessen des Werkzeugs im Eilgang werden das Steuerventil 74 und das Zuhalteventil 56 in ihre jeweils mit a bezeichnete Stellung gebracht, in der die Druckleitung 18 mit der Pumpe 72 verbunden ist und Druckmittel in den Ringraum 14 eingespeist wird. Dieser Druck wirkt auch auf die kleinere Fläche des Druckübersetzerkolbens 78. In der Schaltposition a des Zuhalteventils 56 sind der Druckkanal 52 und die Kompensationsleitung 76 mit dem Tank T verbunden, so dass die Druckräume 50 und 82 entlastet sind. Der Zuhaltekolben 46 wird durch die Kraft der Feder 58 und der Druckübersetzerkolben 82 durch die Kraft der Druckfeder 90 in seine dargestellte Grundposition zurückbewegt in der die jeweils zugeordneten Druckräume minimal sind.

Durch die Druckmittelzufuhr in den Ringraum 14 wird der Kolben 10 in der Darstellung gemäß Figur 4 nach rechts bewegt und die bewegliche Stützplatte 4 in Richtung auf die Stützplatte 2 bewegt - das Werkzeug wird geschlossen. Das aus dem Zylinderraum 12 verdrängte Druckmittel strömt über das Steuerventil 74 zum Tank T hin ab.

Zum Verriegeln und Aufbringen der Zuhaltekraft wird das Zuhalteventil 56 in seine mit b gekennzeichnete Schaltstellung umgeschaltet, so dass Druckmittel im Ringraum 14 eingespannt ist - der Schliesszylinder 6 ist in Schliessrichtung verriegelt. Gleichzeitig wird der Druckkanal 52 über das Zuhalteventil 56 mit der Pumpe 72 verbunden, so dass Druckmittel in den Druckraum 50 gefördert wird. Wie bereits vorstehend beschrieben, wird dann über den auf das Werkzeug wirkenden Zuhaltekolben 56 die erforderliche Schliesskraft aufgebracht.

Der sich im Druckraum 50 aufbauende Druck wirkt über die Kompensationsleitung 76 auch in dem Bodenraum 82 des Druckübersetzers 80, während der abgesperrte Ringraum 14 über die Füllleitung 86 mit dem Kolbenstangenraum 84 verbunden ist. Die vorbeschriebenen Flächenverhältnisse und die Federsteifigkeit der Druckfeder 90 sind dabei so gewählt, dass der Druckübersetzerkolben 82 bei einem Druckaufbau im Druckraum 50 einen Hub (nach links in Figur 1) durchführt, der ausreicht, um genügend Druckmittel über die Füllleitung 86 in den Ringraum 14 zu pumpen, so dass die vorbeschriebene Ausgleichsbewegung des Kolbens 10 aufgrund der Kompressibilität des Druckmittels nicht erfolgt. D. h., das Flächenverhältnis A₂/A₂' muss größer als das Flächenverhältnis A₁/A₁' gewählt sein.

Zum Öffnen des Werkzeuges wird zunächst der Schliessdruck entspannt, wobei das Zuhalteventil 56 in seine mit a bezeichnete Grundposition zurückgeschaltet wird, so dass der Druck im Druckraum 50 zum Tank T hin entspannt wird. Anschließend wird das Steuerventil 74 in seine mit a bezeichnete Schaltstellung umgeschaltet und die bewegliche Stützplatte 4 im Eilgang in Öffnungsrichtung verfahren.

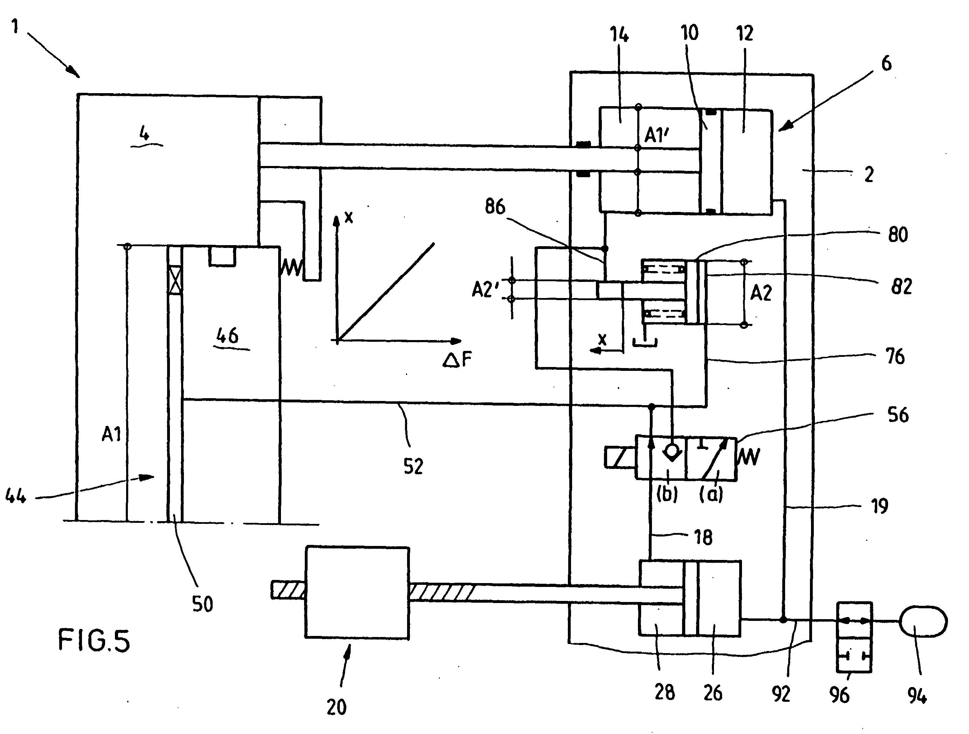

Figur 5 zeigt eine mit Druckübersetzer 80 ausgeführte Schliesseinheit 1 mit einem geschlossenen Hydrauliksystem, wie es im Prinzip bereits anhand der Figuren 1 bis 3 erläutert wurde. D. h., bei dem in Figur 5 dargestellten Ausführungsbeispiel erfolgt der Druckaufbau über die Kolbenpumpe 20, an deren kolbenstangenseitigen Raum 28 die Druckleitung 18 und an deren bodenseitigen Raum 26 die Rücklaufleitung 19 angeschlossen ist. In der Druckleitung 18 ist das Zuhalteventil 56 angeordnet, das in seiner federvorgespannten Grundposition die Druckleitung 18 mit dem Ringraum 14 des Schliesszylinders verbindet. In der dargestellten Schaltposition b des Zuhalteventils 56 ist der kolbenstangenseitige Raum 28 mit dem Druckraum 50 und dem Druckkanal 52 verbunden. Die Anordung des Druckübersetzers 80 entspricht derjenigen beim vorbeschriebenen Ausführungsbeispiel, so dass weitere Erläuterungen entbehrlich sind.

Die Rücklaufleitung 19 ist an den Zylinderraum 12 des Schliesszylinders 6 angeschlossen. Von der Rücklaufleitung 19 zweigt eine zu einem Druckspeicher 94 geführte Verriegelungsleitung 92 ab. Die Verbindung zum Druckspeicher 94 kann über ein Verriegelungsventil 96 auf- bzw. zugesteuert werden.

Zum Schliessen der Schliesseinheit 1 wird die Kolbenpumpe 20 so angesteuert, dass der kolbenstangenseitige Raum 28 verkleinert wird. Das Zuhalteventil 56 befindet sich in seiner mit a bezeichneten Grundposition, in der das Druckmittel über die Druckleitung 18 in den Ringraum 14 gefördert wird, der Druckkanal 52 ist dabei abgesperrt. Wie bei den vorbeschriebenen Ausführungsbeispielen wird die Schliesseinheit 1 im Eilgang geschlossen, wobei das aus dem Zylinderraum 12 verdrängte Druckmittel in den bodenseitigen Raum 26 der Kolbenpumpe 20 zurückgeführt wird.

Zum Verriegeln des Schliesszylinders 6 wird das Zuhalteventil 56 in seine mit b bezeichnete Schaltstellung gebracht und das Verriegelungsventil 96 in seine Öffnungsstellung umgeschaltet.

Dadurch wird der Druckanschluss der Kolbenpumpe 20 mit dem Druckkanal 52 verbunden, so dass das Werkzeug über den Zuhaltekolben 46 mit der erforderlichen Zuhaltekraft beaufschlagt wird. Der Ringraum 14 ist gegenüber der Kolbenpumpe 20 durch das Zuhalteventil 56 abgesperrt, während im bodenseitigen Raum 12 der Druck im Hydrospeicher wirkt - der Schliesszylinder 6 ist somit während des Aufbringen der Zuhaltekraft hydraulisch eingespannt und eventuelle Bewegungen des Kolbens 10 des Schliesszylinders 6 in der vorbeschriebenen Weise durch den Druckübersetzer 80 verhindert.

Zum Entspannen der Schliesseinheit 1 wird die Kolbenpumpe 20 in Gegenrichtung betätigt, so dass das Druckmittel vom Zuhaltezylinder 44 und vom Bodenraum 82 des Druckübersetzers 80 zurück zum kolbenstangenseitigen Raum 28 der Kolbenpumpe strömen kann. Durch die daraus resultierende Bewegung des Differentialkolbens 22 wird Druckmittel aus dem bodenseitigen Raum 26 über das geöffnete Verriegelungsventil 96 in den Druckspeicher 94 zurückgeführt und dieser wieder aufgeladen. Im Anschluss wird das Zuhalteventil 56 umgesteuert, so dass die Schliesseinheit 1 im Eilgang aufgefahren wird, wobei Druckmittel aus dem bodenseitigen Raum 26 in den Zylinderraum 12 und vom Ringraum 14 in den kolbenstangenseitigen Raum 28 verdrängt wird.

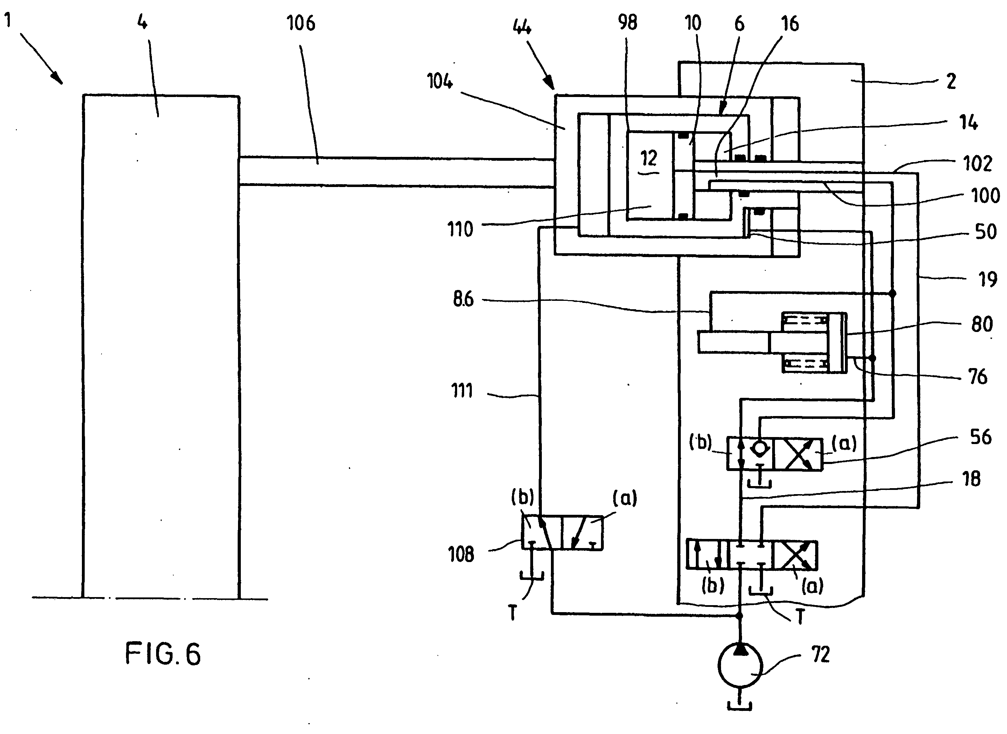

In Figur 6 ist ein Ausführungsbeispiel dargestellt, das mehr oder weniger eine kinematische Umkehr des in Figur 4 dargestellten Prinzips ist.

Die Anordnung der Pumpe 72, des Steuerventils 74, des Zuhalteventils 56 und des Druckübersetzers ist im wesentlichen identisch wie bei dem in Figur 4 beschriebenen Ausführungsbeispiel, so dass auf die diesbezüglichen Ausführungen verwiesen wird.

Im Unterschied zu dem anhand Figur 4 beschriebenen Ausführungsbeispiel ist der Kolben 10 mit seiner Kolbenstange 16 fest mit der Stützplatte 2 verbunden. Dem Kolben 10 ist ein bewegliches Zylindergehäuse 98 des Schliesszylinders 6 zugeordnet, das durch den Kolben 10 in den Zylinderraum 12 und den Ringraum 14 unterteilt wird, und das stirnseitig von der Kolbenstange 16 durchsetzt ist.

Die Druckleitung 18 ist bei entsprechender Stellung der Ventile 56 und 74 über einen die Kolbenstange 16 durchsetzenden Zuführkanal 100 mit dem Ringraum 14 verbunden. Die Rücklaufleitung 19 mündet in einem die Kolbenstange 16 und den Kolben 10 durchsetzenden Entlastungskanal 102, so dass der Zylinderraum 12 mit der Rücklaufleitung 19 verbunden ist.

Auf dem Zylindergehäuse 98 ist ein Gehäuse 104 des Zuhaltezylinders 44 geführt, wobei durch die in Figur 6 rechte Ringstirnfläche des Zylindergehäuses 98 und durch die benachbarte Innenstirnfläche des Gehäuses 104 der Druckraum 50 begrenzt ist. Die in Figur 6 rechten Stirnflächen des zylindergehäuses 98 und des Gehäuses 104 begrenzen einen Raum 110, der über eine Leitung 111 und ein Ventil 108 mit der Pumpe 72 oder dem Tank T verbindbar ist. An dem Gehäuse 104 ist eine mit der beweglichen Stützplatte 4 verbundene Zugstange 106 befestigt.

Zum Schliessen der Schliesseinheit 1 im Eilgang werden das Steuerventil 74 in die Position b und das Zuhalteventil 56 sowie das Ventil 108 in ihre mit a gekennzeichneten Grundpositionen gebracht. Dabei sind der Zylinderraum 12, der Raum 110 und der Druckraum 50 zum Tank T hin entlastet während Druckmittel über die Druckleitung 18, den Zuführkanal 100 in den Ringraum 14 eingespeist wird. In der Folge wird das Zylindergehäuse 98 in der Darstellung gemäß Figur 6 gemeinsam mit dem auf Anschlag stehenden Gehäuse 104 nach rechts bewegt und die Stützplatte 4 über die Zugstange 106 in Schliessrichtung mitgenommen. Zum Aufbringen der Schliesskraft und zum Verriegeln des Schliesszylinders 6 wird das Zuhalteventil 56 in die dargestellte Schaltposition b umgeschaltet, so dass das Druckmittel im Ringraum 14 eingespannt ist und Druckmittel in den Druckraum 50 gefördert wird. Durch den Druckaufbau im Druckraum 50 wird das Gehäuse 104 nach rechts weg vom Zylindergehäuse 98 bewegt und über die Zugstange 106 die erforderliche Zuhaltekraft auf die Stützplatte 4 übertragen. Der Raum 110 ist dabei über das Ventil 108 mit dem Tank T verbunden.

Zum Entspannen der Schliesseinheit 1 wird das Ventil 108 umgeschaltet, so dass das Gehäuse 104 in der Darstellung gemäß Figur 6 wieder nach links hin zum Zylindergehäuse 98 bewegt wird. Zum Öffnen der Form werden dann die beiden Ventile 56 und 74 in ihre mit a gekennzeichneten Schaltstellungen gebracht, so dass Druckmittel über die Pumpe 72 zum Zylinderraum 12 und aus dem Ringraum 14 zum Tank T hin zurückgeführt wird - die bewegliche Stützplatte 4 fährt im Eilgang in ihre Öffnungsstellung zurück.

Bei dem vorbeschriebenen Ausführungsbeispiel entspricht die Wirkung des Druckübersetzers exakt derjenigen der vorbeschriebenen Ausführungsbeispiele, so dass auf weitere Erläuterungen verzichtet werden kann.

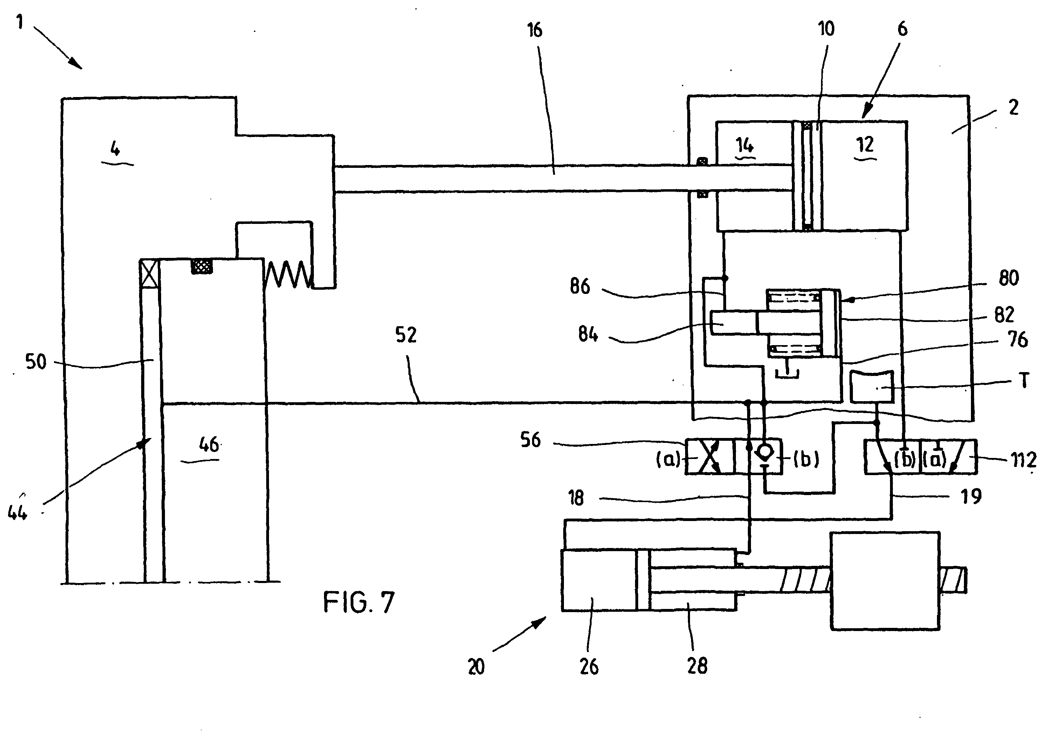

In Figur 7 ist eine Variante des in Figur 5 dargestellten Ausführungsbeispiels gezeigt, wobei der Aufbau des Zuhaltezylinders 44 und des Schliesszylinders 6 identisch wie beim Ausführungsbeispiel gemäß Figur 5 sind. Die Druckmittelzufuhr erfolgt ebenfalls über eine Kolbenpumpe 20, wobei die Druckleitung 18 an den kolbenstangenseitigen Raum 28 und die Rücklaufleitung 19 an den bodenseitigen Raum 26 angeschlossen sind. Bei der dargestellten Variante ist allerdings kein Druckspeicher 94 vorgesehen. Dessen Funktion wird im Prinzip durch ein Sperrventil 112 und einen Tank T übernommen, das in die Rücklaufleitung 19 geschaltet ist. Dieses Sperrventil 112 verbindet in einer Schaltstellung a den Zylinderraum 12 mit der Rücklaufleitung 19, während eine Verbindung zu einem Tank T abgesperrt ist. In der Schaltstellung b ist die Rücklaufleitung 19 mit dem Tank T verbunden, während das Druckmittel im Zylinderraum 12 eingespannt ist.

Das Zuhalteventil 56 verbindet in seiner Schaltstellung a die Druckleitung 18 mit dem Ringraum 14, während der Druckkanal 52 mit dem Tank T verbunden ist. In der mit b gekennzeichneten Schaltestellung verbindet das Zuhalteventil die Druckleitung 18 mit Druckkanal 52, während das Druckmittel im Ringraum 14 eingespannt ist. Die Fülleitung 86 verbindet den Ringraum 14 mit dem Kolbenstangenraum 84. Die Kompensationsleitung 76 verbindet den rückwärtigen Bodenraum 82 mit dem Druckkanal 52.

Zum Schliessen der Schliesseinheit 1 im Eilgang werden die Ventile 56 und 112 in ihre mit a gekennzeichneten Schaltpositionen gebracht, so dass Druckmittel aus dem kolbenstangenseitigen Raum 28 der Kolbenpumpe 20 über die Druckleitung 18 in den Ringraum 14 gefördert und die Stützplatte 4 in Schliessrichtung bewegt wird. Das dabei aus dem Zylinderraum 12 verdrängte Druckmittel wird über die Rücklaufleitung 19 in den bodenseitigen Raum 26 eingespeist.

Zum Verriegeln des Schliesszylinders 6 und zum Aufbringen der Zuhaltekraft werden die beiden Ventile 56, 112 in ihre dargestellten Schaltpositionen b umgeschaltet, so dass das Druckmittel in den Räumen 12, 14 eingespannt ist. Gleichzeitig ist der Druckkanal 52 mit der Druckleitung 18 verbunden, so dass der Druck im Druckraum 50 ansteigt und der Zuhaltekolben 46 in Schliessrichtung bewegt wird. Zum Entspannen der Schliesseinheit 1 wird das Zuhalteventil 56 wieder in seine Schaltstellung a zurückgebracht, so dass der Druck im Druckraum 50 zum Tank T hin entspannt wird. Anschließend wird das Sperrventil 112 umgeschaltet und die Kolbenpumpe 20 in Gegenrichtung betätigt, so dass die Stützplatte 4 in öffnungsrichtung verfahren wir.

Nachteilig bei den vorbeschriebenen Kompensationseinrichtungen (Druckübersetzer 80) ist, dass diese nur für ein ganz bestimmtes Volumen und damit eine definierte Schliessposition der Schliesseinheit wirksam sind. D. h., bei einer Veränderung der Schliessposition wird auch der Kolben 10 aufgrund der Kompressibilität des Druckmittels in Axialrichtung bewegt und somit die Dichtungen 70 dynamisch beansprucht.

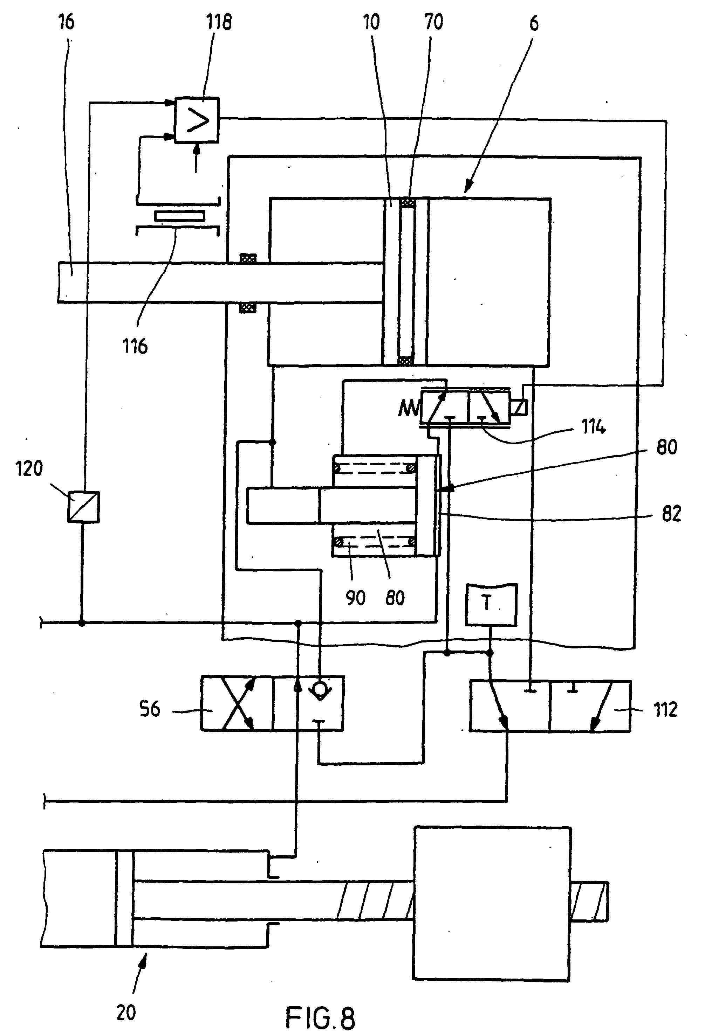

Figur 8 zeigt eine Lösung, durch die die Belastung der Dichtung 70 auch bei einer Veränderung der Schliessposition der Schliesseinheit 1 minimal ist. Diese Variante baut auf dem in Figur 7 dargestellten Ausführungsbeispiel auf, so dass auf eine Beschreibung der Funktion der Kolbenpumpe 20, des Zuhalteventils 56, des Sperrventils 112, des Druckübersetzer 80 und des Schliesszylinders 6 verzichtet werden kann.

Zur Kompensation einer Veränderung der Schliessposition ist der Federraum 88 des Druckübersetzers 80 über ein proportional verstellbares Regelventil 114 mit dem Tank T oder dem rückwärtigen Bodenraum 82 verbindbar. Mit Hilfe dieses Regelventils 114 lässt sich in Abhängigkeit von der Schliessposition der Schliesseinheit 1 im Federraum 80 ein Druck aufbauen, der so gewählt ist, dass die Sperrposition des Schliesszylinders 6 unabhängig von der Schliessposition der schliesseinheit 1 konstant gehalten werden kann. Der im Federraum 80 anliegende Druck unterstützt dabei die Kraft der Druckfeder 90 und bestimmt somit den Hub des Druckübersetzers 80.

Bei dem in Figur 8 dargestellten Ausführungsbeispiel erfolgt die Ansteuerung des Sperrventils 112 mittels eines wegmesssystems. Dabei erfasst ein Positionssensor 116 die Stellung der Kolbenstange 16 des Kolbens 10 des Schliesszylinders 6. Das vom Positionssensor 116 abgegebene Signal wird mittels eines Regelverstärkers 118 verarbeitet und dabei mit einem Sollwert verglichen. In Abhängigkeit vom erfassten Wert und vom Sollwert wird vom Regelverstärker 118 ein Steuersignal an das Regelventil 114 abgegeben, so dass dieses den Druck im Federraum 80 auf einen entsprechenden Wert einstellt der zwischen dem Tankdruck und dem Druck im Bodenraum 82 liegen kann. Das Regelverhalten lässt sich weiter verbessern, wenn der sich im Bodenraum 82 einstellende Druck über einen Drucksensor 120 erfasst und im Regelverstärker verarbeitet wird.

Durch diese Positionsregelung lässt sich während des Aufbringens der Schliesskraft eine Verschiebung des Kolbens 10 des Schliesszylinders 6 zuverlässig verhindern, so dass die Lebensdauer der Dichtung 70 wesentlich erhöht ist.

Offenbart ist eine Schliesseinheit für eine Kunststoffverarbeitungsmaschine insbesondere für eine Spritzgießmaschine. Die Schliesseinheit hat einen hydraulischen Zuhaltezylinder, der mittels eines hydraulischen Schliesszylinders in öffnungs- bzw. Schliessrichtung bewegbar ist. Dem Schliesszylinder ist eine mechanische oder hydraulische Verriegelung zugeordnet, über die dieser während des Aufbringens der Zuhaltekraft abgestützt ist.
- 1: Schliesseinheit
- 2: Stützplatte
- 4: bewegliche Stützplatte
- 6: Schliesszylinder
- 8: Schliesszylinder
- 10: Kolben
- 12, 12': Zylinderraum
- 14, 14': Ringraum
- 16: Kolbenstange
- 18: Druckleitung
- 19: Rücklaufleitung
- 20: Kolbenpumpe
- 22: Differentialkolben
- 24: Gewindespindel
- 26: bodenseitiger Raum
- 28: kolbenstangenseitiger Raum
- 30: Spindelmutter
- 32: Führungssäule
- 34: Führungssäule
- 36: Führung
- 38: Führung
- 40: Verriegelung
- 42: Verriegelung
- 44: Zuhaltezylinder
- 46: Zuhaltekolben
- 48: Zylinderbohrung
- 50: Druckraum
- 52: Druckkanal
- 54: Kolbenstangenkanal
- 56: Zuhalteventil
- 58: Feder
- 60: Anschlagkörper
- 62: Stützring
- 64: Kolbenbund
- 66: Rücklaufkanal
- 68: Ringraum
- 69: Ringstirnfläche
- 70: Dichtung
- 72: Pumpe
- 74: Steuerventil
- 76: Kompensationsleitung
- 78: Druckübersetzerkolben
- 80: Druckübersetzer
- 82: Bodenraum
- 84: Kolbenstangenraum
- 86: Füllleitung
- 88: Federraum
- 90: Druckfeder
- 92: Verriegelungsleitung
- 94: Druckspeicher
- 96: Verriegelungsventil
- 98: zylindergehäuse
- 100: Zufuhrkanal
- 102: Entlastungskanal
- 104: Gehäuse
- 106: Zugstange
- 108: Ventil
- 110: Raum
- 111: Leitung
- 112: Sperrventil
- 114: Regelventil
- 116: Positionssensor
- 118: Drucksensor

## Patentansprüche

1. Schliesseinheit für eine Kunststoffverarbeitungsmaschine, insbesondere eine Spritzgießmaschine, mit einer feststehenden und einer beweglichen Werkzeugspannplatte, die mittels einer Schliesseinrichtung in Öffnungs- und Schliessrichtung bewegbar sind, und mit einem mit einer Pumpe in Wirkverbindung stehenden hydraulischen Zuhaltezylinder, der mittels der Schliesseinrichtung bewegbar ist und über den auf die sich in ihrer Schliesstellung befindliche bewegliche werkzeugspannplatte eine Zuhaltekraft aufbringbar ist, wobei die Schliesseinrichtung zumindest einen hydraulischen Schliesszylinder (6; 8) hat, und eine Verriegelung (40; 56; 94; 112) zum Verriegeln des Schliesszylinders (6) vorgesehen ist, wobei über eine Zuhalteventileinrichtung (56) der Verriegelung, ein in Schliessrichtung wirksamer Druckraum (50) des Zuhaltezylinders (44) mit einem entsprechenden Druckraum (14) des Schliesszylinders (6) oder mit der Pumpe (20, 72) verbindbar ist, **dadurch gekennzeichnet, dass** zwischen der Zuhalteventileinrichtung (56) und dem Schliesszylinder (6; 8) ein Druckübersetzer als Kompensationseinrichtung (80) zum Zuführen von Druckmittel in den in Schliessrichtung wirksamen Druckraum (14) des Schliesszylinders (6; 8) vorgesehen ist.

2. Schliesseinheit nach Patentanspruch 1, wobei eine sich zwischen einem kolbenstangenseitigen Ringraum (14) des Schliesszylinders (6; 8) und dem Druckraum (50) erstreckende Druckleitung durch eine Kolbenstange (16) des Schliesszylinders (6) geführt ist.

3. Schliesseinheit nach Patentanspruch 1 oder 2, wobei das Zuhalteventil ein Mehrwegeventil (56) hat, das in zumindest einer Position den Druckraum (50) des Zuhaltezylinders (44) mit der Pumpe (20) verbindet und den Schliesszylinder (6; 8) zumindest in Schliessrichtung verriegelt.

4. Schliesseinheit nach einem der vorhergehenden Patentansprüche, wobei ein kleinerer Druckraum (84) des Druckübersetzters (80) mit dem in Schliessrichtung wirksamen Druckraum (14) des Schliesszylinders (6; 8) und dessen größerer Druckraum (82) mit dem Druckraum (50) des Zuhaltezylinders (44) verbindbar ist.

5. Schliesseinheit nach Patentanspruch 4, wobei das Flächenverhältnis (A_{2/}A₂') zwischen dem größeren und dem kleineren Durchmesser eines Druckübersetzerkolbens (80) des Druckübersetzers (80) größer als das Flächenverhältnis A₁/A₁' der in Schliessrichtung wirksamen Stirnfläche eines Zuhaltekolbens (46) des Zuhaltezylinders (44) zu einer den in Schliessrichtung wirksamen Druckraum (14) des Schliesszylinders (6) begrenzenden Stirnfläche des Kolbens (10) ist.

6. Schliesseinheit nach einem der vorhergehenden Patentansprüche, wobei der Druckübersetzerkolben (78) über eine Druckfeder(90) in eine Grundposition vorgespannt ist, in der der größere Druckraum (82) minimal ist.

7. Schliesseinheit nach Patentanspruch 6, wobei eine in Richtung der Druckfeder (90) wirksame Ringstirnfläche des Druckübersetzerkolbens (78) über ein Regelventil (114) mit Tankdruck oder dem Druck in dem Druckraum (82) mit größerem Durchmesser verbindbar ist.

8. Schliesseinheit nach Patentanspruch 7, wobei das Regelventil (114) in Abhängigkeit von der Hubposition des Schliesszylinders (6) angesteuert ist.

9. Schliesseinheit nach einem der vorhergehenden Patentansprüche, wobei ein in Öffnungsrichtung wirksamer Druckraum (12) des Schliesszylinders (6) mit einem Rücklaufanschluss der Pumpe (20) oder einem Tank verbindbar ist.

10. Schliesseinheit nach einem der vorhergehenden Patentansprüche, wobei die Pumpe eine Kolbenpumpe (20) ist.

11. Schliesseinheit nach Patentanspruch 10, wobei die Kolbenpumpe (20) über eine Spindel (24) betätigt ist.

12. Schliesseinheit nach einem der vorhergehenden Patentansprüche, wobei eine Kolbenstange (16) des Schliesszylinders (6) in Axialrichtung festgelegt ist und ein Zylindergehäuse (98) des Schliesszylinders (6) axial verschiebbar geführt ist.

13. Schliesseinheit nach einem der vorhergehenden Patentansprüche, wobei der Zuhaltezylinder (44) mittels einer Feder (58) in seine Grundposition vorgespannt ist, in der der Druckraum (50) minimal ist.

14. Schliesseinheit nach einem der Patentansprüche 1 bis 13, wobei ein Zuhaltekolben (46) des Zuhaltezylinders (44) eine in Öffnungsrichtung wirksame Ringstirnfläche (69) hat, die über das Zuhalteventil (56) oder eine entsprechende Ventilanordnung mit einem Rücklaufanschluss der Pumpe (20) verbindbar oder absperrbar ist.

15. Schliesseinheit nach einem der vorhergehenden Patentansprüche, wobei ein Gehäuse (104) des Zuhaltezylinders axial verschiebbar in einer mit dem Schliesszylinder verbundenen Stützplatte geführt ist.

16. Schliesseinheit nach Patentanspruch 14 und 15, wobei das Zylindergehäuse (98) des Schliesszylinders (6) mit einem axialverschiebbaren Gehäuse (104) den Druckraum (50) und einen in Öffnungsrichtung wirksamen Raum (110) des Zuhaltezylinders begrenzt.

17. Schliesseinheit nach Patentanspruch 16, wobei die Druckmittelzufuhr zu den vom Kolben (10) begrenzten Druckräumen des Zylindergehäuses (98) durch den Kolben (10) hindurch erfolgt.

## Claims

1. Clamping unit for a plastics processing machine, in particular an injection molding machine, comprising a stationary platen and a movable platen movable in the opening and closing directions by means of clamping means, and comprising a hydraulic locking cylinder in operative connection with a pump, which is movable by means of the clamping means and whereby a locking force may be applied to the movable platen when in its closed position, wherein the clamping means include at least one hydraulic clamping cylinder (6; 8), and a blocking mechanism (40; 56; 94; 112) for blocking the clamping cylinder (6) is provided, wherein with the aid of a locking valve means (56) of the blocking mechanism a pressure chamber (50) of the locking cylinder (44) acting in the closing direction may be connected with a corresponding pressure chamber (14) of the clamping cylinder (6) or with the pump (20, 72), **characterized in that** between the locking valve means (56) and the clamping cylinder (6; 8) a pressure intensifier is provided as a compensating means (80) for supplying pressure medium into the pressure chamber (14) of the clamping cylinder (6; 8) acting in the closing direction.

2. The clamping unit in accordance with Claim 1, wherein a pressure line extending between a piston rod-side annular chamber (14) of the clamping cylinder (6; 8) and the pressure chamber (50) is routed through a piston rod (16) of the clamping cylinder (6).

3. The clamping unit in accordance with Claim 1 or 2, wherein the locking valve includes a multidirectional valve (56) which in at least one position connects the pressure chamber (50) of the locking cylinder (44) with the pump (20) and at least in the closing direction locks the clamping cylinder (6; 8).

4. The clamping unit in accordance with any one of the preceding claims, wherein a smaller pressure chamber (84) of the pressure intensifier (80) is adapted to be connected with the pressure chamber (14) of the clamping cylinder (6; 8) acting in the closing direction, and the larger pressure chamber (82) thereof is adapted to be connected with the pressure chamber (50) of the locking cylinder (44).

5. The clamping unit in accordance with Claim 4, wherein the area ratio (A₂/A₂') between the larger and smaller diameters of a pressure intensifier piston (80) of the pressure intensifier (80) is higher than the area ratio A₁/A₁' of the end face of a locking piston (46) of the locking cylinder (44) acting in the closing direction to an end face of the piston (10) defining the pressure chamber (14) of the clamping cylinder (6) acting in the closing direction.

6. The clamping unit in accordance with any one of the preceding claims, wherein the pressure intensifier piston (78) is biased via a pressure spring (90) into a basic position in which the larger pressure chamber (82) is minimum.

7. The clamping unit in accordance with Claim 6, wherein an annular end face of the pressure intensifier piston (78) acting in the direction of the pressure spring (90) is adapted to be connected to the tank pressure or to the pressure in the larger-diameter pressure chamber (82) via a high response proportional valve (114).

8. The clamping unit in accordance with Claim 7, wherein the high response proportional valve (114) is driven in accordance with the stroke position of the clamping cylinder (6).

9. The clamping unit in accordance with any one of the preceding claims, wherein a pressure chamber (12) of the clamping cylinder (6) acting in the opening direction is adapted to be connected with a return port of the pump (20) or with a tank.

10. The clamping unit in accordance with any one of the preceding claims, wherein the pump is a piston pump (20).

11. The clamping unit in accordance with Claim 10, wherein the piston pump (20) is actuated via a spindle (24).

12. The clamping unit in accordance with any one of the preceding claims, wherein a piston rod (16) of the clamping cylinder (6) is secured in the axial direction, and a cylinder housing (98) of the clamping cylinder (6) is guided in an axially displaceable manner.

13. The clamping unit in accordance with any one of the preceding claims, wherein the locking cylinder (44) is biased through the intermediary of a spring (58) into its basic position wherein the pressure chamber (50) is minimum.

14. The clamping unit in accordance with any one of Claims 1 to 13, wherein a locking piston (46) of the locking cylinder (44) includes an annular end face (69) which acts in the opening direction and is adapted to be connected with a return port of the pump (20) or blocked through the intermediary of the locking valve (56) or of a corresponding valve assembly.

15. The clamping unit in accordance with any one of the preceding claims, wherein a housing (104) of the locking cylinder is guided in an axially displaceable manner in a support plate connected with the clamping cylinder.

16. The clamping unit in accordance with Claim 14 and 15, wherein the cylinder housing (98) of the clamping cylinder (6) defines with an axially displaceable housing (104) the pressure chamber (50) and a chamber (110) of the locking cylinder acting in the opening direction.

17. The clamping unit in accordance with Claim 16, wherein the pressure medium supply to the pressure chambers of the cylinder housing (98) defined by the piston (10) takes place through the piston (10).

## Revendications

1. Dispositif de fermeture pour une machine de traitement des matières plastiques, en particulier une machine à injecter, avec une plaque fixe de fixation d'outil et une plaque mobile de fixation d'outil qui sont déplaçables dans le sens d'ouverture et de fermeture au moyen d'un dispositif de fermeture, et avec un cylindre de verrouillage hydraulique en liaison active avec une pompe, déplaçable au moyen du dispositif de fermeture et via lequel une force de verrouillage est applicable sur la plaque de fixation mobile d'outil se trouvant dans sa position de fermeture, dans lequel le dispositif de fermeture présente au moins un cylindre de fermeture hydraulique (6 ; 8) et un verrouillage (40 ; 56 ; 94 ; 112) est prévu pour verrouiller le cylindre de fermeture (6), dans lequel un espace de pression (50) actif dans le sens de fermeture du cylindre de verrouillage (44) peut être relié à un espace correspondant de pression (14) du cylindre de fermeture (6) ou à la pompe (20, 72) par le biais d'un dispositif de vannes de verrouillage (56) du verrou, **caractérisé en ce qu'**un multiplicateur de pression est prévu comme dispositif de compensation (80) entre le dispositif de vannes de verrouillage (56) et le cylindre de fermeture (6 ; 8) pour l'alimentation de moyen de pression dans l'espace de pression (14) actif dans le sens de fermeture du cylindre de fermeture (6; 8).

2. Dispositif de fermeture selon la revendication 1, dans lequel une conduite sous pression s'étend entre un espace annulaire (14) côté tige de piston du cylindre de fermeture (6 ; 8) et l'espace de pression (50) traverse une tige de piston (16) du cylindre de fermeture (6).

3. Dispositif de fermeture selon la revendication 1 ou 2, la vanne de verrouillage ayant une vanne à plusieurs voies (56) qui relie dans au moins une position de l'espace de pression (50) du cylindre de verrouillage (44) à la pompe (20) et qui verrouille le cylindre de fermeture (6 ; 8) au moins dans le sens de fermeture.

4. Dispositif de fermeture selon l'une des revendications précédentes, dans lequel un plus faible espace de pression (84) du multiplicateur de pression (80) peut être relié à l'espace de pression (14) du cylindre de fermeture (6 ; 8), espace considéré comme actif dans le sens de fermeture, et l'espace de pression plus important (82) peut être relié à l'espace de pression (50) du cylindre de verrouillage (44).

5. Dispositif de fermeture selon la revendication 4, dans lequel le rapport de surface (A₂/A₂') entre le diamètre plus élevé et le diamètre plus faible d'un piston de multiplicateur de pression (80) du multiplicateur de pression (80) est supérieur au rapport de surface (A₁/A₁') de la surface frontale active dans le sens de fermeture d'un piston de verrouillage (46) du cylindre de verrouillage (44) par rapport à une surface frontale du piston (10) délimitant l'espace de pression (14) du cylindre de fermeture (6), espace considéré comme actif dans le sens de fermeture.

6. Dispositif de fermeture selon l'une des revendications précédentes, dans lequel le piston du multiplicateur de pression (78) est précontraint via un ressort de pression (90) dans une position de base, dans laquelle l'espace de pression (82) plus important est minimal.

7. Dispositif de fermeture selon la revendication 6, dans lequel une surface frontale annulaire du piston du multiplicateur de pression (78), considérée comme active dans le sens du ressort de pression (90), peut être reliée via une vanne de régulation (114) à la pression du réservoir ou à la pression dans l'espace de pression (82) au diamètre plus important.

8. Dispositif de fermeture selon la revendication 7, dans lequel la vanne de régulation (114) est commandée en fonction de la position de levage du cylindre de fermeture (6).

9. Dispositif de fermeture selon l'une des revendications précédentes, dans lequel un espace de pression (12) actif dans le sens d'ouverture du cylindre de fermeture (6) peut être relié à un raccord de retour de la pompe (20) ou à un réservoir.

10. Dispositif de fermeture selon l'une des revendications précédentes, dans lequel la pompe est une pompe à piston (20).

11. Dispositif de fermeture selon la revendication 10, dans lequel la pompe à piston (20) est actionnée via une broche (24).

12. Dispositif de fermeture selon l'une des revendications précédentes, dans lequel une tige de piston (16) du cylindre de fermeture (6) est fixée dans le sens axial et un boîtier de cylindre (98) du cylindre de fermeture (6) est logé de manière coulissante axialement.

13. Dispositif de fermeture selon l'une des revendications précédentes dans lequel le cylindre de verrouillage (44) est précontraint au moyen d'un ressort (58) dans sa position de base, dans laquelle l'espace de pression (50) est minimal.

14. Dispositif de fermeture selon l'une des revendications 1 à 13, dans lequel un piston de verrouillage (46) du cylindre de verrouillage (44) présente une surface frontale annulaire (69) active dans le sens d'ouverture, surface qui peut être reliée à un raccord de retour de la pompe (20) ou arrêtée par le biais de la vanne de verrouillage (56) ou d'une disposition correspondante de vannes.

15. Dispositif de fermeture selon l'une des revendications précédentes, dans lequel un boîtier (104) du cylindre de verrouillage est logé de manière coulissante axialement dans une plaque d'appui reliée au cylindre de fermeture.

16. Dispositif de fermeture selon la revendication 14 ou 15, dans lequel le boîtier du cylindre (98) du cylindre de fermeture (6) délimite, avec un boîtier (104) coulissant axialement, l'espace de pression (50) et un espace (110) du cylindre de verrouillage, espace considéré comme actif dans le sens d'ouverture.

17. Dispositif de fermeture selon la revendication 16, dans lequel l'apport de moyen de pression vers les espaces de pression limités par le piston (10), espaces du boîtier de cylindre (98), s'effectue à travers le piston (10).
